# EUROPÄISCHE PATENTANMELDUNG

(11) **EP 3 376 060 A1**
(43) Veröffentlichungstag der Anmeldung: **19.09.2018**
(21) Anmeldenummer: 18158499.6
(22) Anmeldetag: 26.02.2018
(51) Int. Cl.: F16B 33/00, F16B 37/08, H02G 13/00, F16B 35/06

(54) **SCHNELLVERSCHRAUBUNG, INSBESONDERE ZUM VERBINDEN VON MEHRTEILIGEN BAUGRUPPEN**

(30) Priorität: 13.03.2017 DE 102017105274; 20.04.2017 DE 102017108414
(71) Anmelder: DEHN + SÖHNE GMBH + CO KG, 92318 Neumarkt/Opf (DE)
(72) Erfinder: SEGER, Siegfried, 92364 Deining (DE)
(74) Vertreter: Kruspig, Volkmar

(57) **Zusammenfassung**

Die Erfindung betrifft eine Schnellverschraubung, insbesondere zum Verbinden von mehrteiligen Baugruppen, welche in unterschiedlichen Positionen zueinander fixierbar sind, insbesondere Baugruppen für elektrotechnische Einrichtungen oder Anwendungen, bestehend aus einem ersten Verbindungsteil (3), ausgebildet als Gewindestange oder Schraube, jeweils mit Außengewinde und einem zweiten Verbindungsteil (1), ausgebildet als Gegenstück oder Mutter, jeweils mit zum Außengewinde komplementären Innengewinde (4). Erfindungsgemäß ist sowohl das Außengewinde als auch das Innengewinde (4) an mindestens zwei gegenüberliegenden, in Schraubrichtung verlaufenden Längsseiten ausgeräumt oder abgeflacht, wobei sich die Ausräumung oder Abflachung (5,6) beim ersten Verbindungsteil (3) mindestens über einen Längsseitenabschnitt, beginnend von einer Gewindespitze (8) und beim zweiten Verbindungsteil (1) über dessen gesamte Innengewindelänge oder -tiefe erstreckt.

## Beschreibung

Die Erfindung betrifft eine Schnellverschraubung, insbesondere zum Verbinden von mehrteiligen Baugruppen, welche in unterschiedlichen Positionen zueinander fixierbar sind, insbesondere Baugruppen für elektrotechnische Einrichtungen oder Anwendungen, bestehend aus einem ersten Verbindungsteil, ausgebildet als Gewindestange oder Schraube, jeweils mit Außengewinde und einem zweiten Verbindungsteil, ausgebildet als Gegenstück oder Mutter, jeweils mit zum Außengewinde komplementären Innengewinde gemäß Patentanspruch 1.

Aus dem deutschen Gebrauchsmuster DE 93 16 867 U1 ist eine Befestigungslösung vorbekannt, mit der eine Sicherung eines auf einem Gewindebolzen zu haltenden Teiles unabhängig von der Länge des Gewindebolzens in kürzester Zeit unter Vermeidung aufwendigen Schraubens erreichbar ist.

Diesbezüglich sind zwei Taschen in Schraubrichtung hintereinander versetzt zueinander vorgesehen, die zudem an diagonal gegenüberliegenden Wandbereichen nur partiell umlaufendes Innengewinde besitzen, das heißt lediglich in Richtung der Mittellängsachse des Mutternkörpers aus diesen beiden für sich unvollkommenen Gewindeteilen entsteht ein im Zusammenwirken auf einem beide Taschen durchragenden Gewindebolzen vollständig wirkendes Gewinde und es ergibt sich die Möglichkeit, durch Verschwenken des Mutternkörpers diesen ohne Drehbewegungen über eine Gewindestange ohne Eingriff des Gewindes bis zum Anschlag an das zu haltende Teil zu schieben. Durch Zurückschwenken in eine koaxiale Position zum Gewindebolzen wird dann der gewünschte Gewindeeingriff erreicht.

Bekannt ist darüber hinaus ein Schnellspanner für Batterieklemmen gemäß DE 10 2006 020 754 A1. Der Schnellspanner weist einen Klemmkörper mit Klemmbacken auf. Die Klemmbacken sind durch ein Verschließen eines seitlich des Batteriepols verlaufenden Verschlusselementes und eines Gegenstückes aufeinander zu verstellbar und dadurch am Pol anklemmbar. Eine sichere Montage wird dadurch erreicht, dass ein Hebel schwenkbar um ein das Verschlusselement aufnehmendes, senkrecht zur Achse des Verschlusselementes angeordnetes Drehachsenelement angeordnet ist, und zwar derart, dass die Schwenkebene des Hebels im Wesentlichen parallel zur Achse des Verschlusselementes liegt.

Bei bekannten Klemm- und Verbindungsanordnungen für den äußeren Blitzschutz, beispielsweise nach DE 20 2014 000 454 U1 oder DE 10 2011 103 415 B4, wird von Klemmen ausgegangen, die eine Kontaktplatte aufweisen, welche von einem Überleger überfangen wird.

Derartige Überleger weisen Ausformungen zur Aufnahme von Leiterabschnitten auf und besitzen eine Auflagefläche mit einer Bohrung für eine Klemmenschraube oder einen Klemmenbolzen. Im Bereich der Bohrung kann darüber hinaus eine Prägung zur Schaffung einer Auflagefläche für ein Befestigungsmittel, insbesondere einer Mutter vorgesehen werden.

Nachdem die Leiterabschnitte in eine entsprechende Position zwischen Kontaktplatte und Überlieger gebracht wurden, erfolgt ein Anziehen der Schraubverbindung unter Nutzung üblicher oder für den betreffenden Anwendungsfall modifizierter Schrauben und Muttern, wobei in den meisten Fällen hierfür ein Werkzeug in Form eines Schraubenschlüssels oder eines Innensechskantschlüssels eingesetzt werden muss.

Die Nutzung des Kniehebelprinzips für Schnellspannklemmen, insbesondere zur Anbringung von chirurgischen Hilfsmitteln, wie Wundhaken oder peripherer Operationstechniken an ein Rahmensystem ist beispielsweise aus der EP 2 151 197 A1 bekannt. Eine solche bekannte Schnellspannklemme weist zwei mit einer zentralen Aufnahme für einen Zugbolzen versehene Klemmelemente auf, wobei das mit dem Rahmensystem zu verbindende Klemmelement zwei miteinander verbundene Schenkel aufweist. Das zweite Klemmelement ist als einteiliger Schenkel ausführbar, wobei der Gegenschenkel durch einen äußeren Oberflächenabschnitt eines der Schenkel des ersten Klemmteiles gebildet ist. Mit einer solchen Schnellspannklemme gelingt es zwar sehr einfach und ohne Werkzeug, eine Klemmverbindung zwischen zwei oder mehreren Teilen herbeizuführen, jedoch ist der Schnellspannweg außerordentlich begrenzt, so dass für jeden Anwendungsfall der Verbindung entsprechender chirurgischer Hilfsmittel eine Vielzahl von maßlich angepassten Schnellspannklemmen vorgehalten werden muss.

Die Befestigungsvorrichtung für Sanitärausstattungsgegenstände nach DE 42 10 682 A1 löst die Aufgabe, die Montage eines Rahmens auf einem Gestell in unbekanntem Abstand in einfacher Weise zu ermöglichen, wobei eine sichere und dauerhafte Befestigung zu gewährleisten ist.

Diesbezüglich werden Distanzbolzen, ausgeführt als Gewindestangen, verwendet, wobei die Gewindestangen zwei, sich gegenüberliegende, eben abgeflachte Seiten aufweisen. Das betreffende Halteelement verfügt über ein innenliegendes Gewinde zur Aufnahme des Distanzbolzens. Das Halteelement weist einen längsseitigen Schlitz auf, der nur geringfügig schmaler ist als die schmalste Seite des Distanzbolzens. Eine derartige Schnellbefestigung hat den Vorteil, dass, nachdem der Distanzbolzen des Verschlusselementes durch den Befestigungsrahmen hindurchgeführt wurde, der Distanzbolzen in das Halteelement hineinreicht und durch eine Drehung um die Längsachse des Verschlusselementes die an der Oberfläche des Distanzbolzens angeformten Eingriffszähne in die entsprechenden Gegenzähne in der Öffnung des Halteelementes eingreifen. Während des Drehvorganges soll sich durch die Spannvorrichtung eine Vorspannung am Verschlusselement einstellen, die ein selbständiges Lösen der Schnellbefestigung verhindert.

Die Eingriffszähne nach DE 42 10 682 A1 sollen nicht gewindeartig ausgebildet sein, da sich zwischen den betreffenden Abschnitten Freiräume befinden.

Um eine endgültige und sichere Befestigung zu bewerkstelligen ist eine Spannvorrichtung mit Auflager und Gegenlager vorhanden, bei der sowohl in dem Auflager als auch in dem Gegenlager mindestens jeweils zwei Spannzähne ausgebildet sind. Die Spannzähne weisen eine kurze Steilflanke, die nahezu axial verläuft, und eine lange Flachflanke auf, so dass sich eine sägezahnähnliche Struktur ergibt. Zum Arretieren ist dennoch ein erheblicher Kraftaufwand erforderlich, der regelmäßig nur unter Anwendung eines Werkzeuges aufgebracht werden kann, was gerade bei schwierigen Montagebedingungen und Umständen einen Nachteil darstellt.

Aus dem Vorgenannten ist es Aufgabe der Erfindung, eine weiterentwickelte Schnellspannverschraubung, insbesondere zum Verbinden von mehrteiligen Baugruppen, welche in unterschiedlichen Positionen zueinander fixierbar sind, insbesondere Baugruppen für elektrotechnische Einrichtungen oder Anwendungen, anzugeben, welche einerseits eine schnelle Verbindung der Baugruppe oder Bauteile ermöglicht und andererseits es gestattet, die Verbindung werkzeuglos auszuführen.

Da diese verbindenden Bauteile oder Baugruppen je nach konkreter Anwendungssituation im unterschiedlichen Abstand zueinander, mit oder ohne Zwischenlagen oder weiteren Teilen fixiert werden müssen, wäre es vom Grundsatz her erforderlich, ausgehend von der gewünschten Schraubverbindung auf den Einsatzfall zu orientieren, welcher den größten zu überbrückenden Abstand der zu verbindenden Teile aufweist. Dies wiederum bedeutet, dass entweder ein sehr langwieriges und umständliches Schraubprocedere ausgeführt werden muss, wenn Teile im geringeren Abstand verschraubt werden müssen oder andererseits Schrauben, Bolzen oder Gewindestangen vor Ort gekürzt werden müssen. Derartige Arbeiten, insbesondere ein Kürzen einer Schraube, eines Bolzens oder einer Gewindestange ist unter Werkstattbedingungen sicherlich relativ einfach durchführbar, nicht jedoch dann, wenn auf einer Baustelle oder sonstigen erschwerten Bedingungen, zum Beispiel auf einem Hausdach, elektrische Anlagen oder Einrichtungen montiert oder angeschlossen werden müssen. Hierbei handelt es sich insbesondere um Einrichtungen für den äußeren Blitzschutz, die sich naturgemäß am höchsten Punkt eines Gebäudes oder einer Industrieanlage befinden.

Eine weitere Aufgabe der Erfindung besteht darin, dass zum Erreichen der notwendigen Kräfte zur Verbindung der Baugruppen, das heißt mit Blick auf den erforderlichen Kraftschluss auch dieser Kraftschluss ohne Nutzung von Werkzeugen erreicht werden kann.

Letztendlich soll die Schnellverschraubung auch die Nutzung von Schrauben, Gewindestangen, Bolzen oder Muttern ermöglichen, die ein sogenanntes verschlagendes Gewinde aufweisen. Unter verschlagenem Gewinde versteht man eine durch mechanischen Einfluss veränderte Gewindegeometrie, die dazu führt, dass ohne Nachschneiden des Gewindes eine Nutzung des entsprechenden Verbindungsmittels nicht mehr möglich ist.

Die Lösung der Aufgabe der Erfindung erfolgt durch eine Schnellverschraubung gemäß der Merkmalskombination nach Anspruch 1, wobei die Unteransprüche mindestens zweckmäßige Ausgestaltungen und Weiterbildungen darstellen. Erfindungsgemäß ist darüber hinaus die spezielle Verwendung und der Einsatz der erfindungsgemäßen Schnellverschraubung gemäß Patentanspruch 12.

Es wird demnach von einer Schnellverschraubung ausgegangen, die dem Verbinden von mehrteiligen Baugruppen dient, wobei diese Baugruppen in unterschiedlichen Positionen je nach Anwendung und Einsatzfall zueinander fixiert werden müssen. Hierbei kann es sich insbesondere um Baugruppen für elektrotechnische Einrichtungen oder Anwendungen handeln, ohne dass die Erfindung auf eine solche Anwendung beschränkt ist.

Die Schnellverschraubung besteht aus einem ersten Verbindungsteil, ausgebildet als Gewindestange, Gewindeschraube oder Gewindebolzen, jeweils mit einem Außengewinde und einem zweiten Verbindungsteil. Das zweite Verbindungsteil ist als Gegenstück, insbesondere als Mutter ausgebildet und weist jeweils ein zum Außengewinde komplementäres Innengewinde auf.

Erfindungsgemäß ist sowohl das Außengewinde als auch das Innengewinde an mindestens zwei gegenüberliegenden, in Schraubrichtung verlaufenden Längsseiten ausgeräumt oder abgeflacht, wobei sich die Ausräumung beim ersten Verbindungsteil mindestens über einen Längsseitenabschnitt, beginnend von einer Gewindespitze und beim zweiten Verbindungsteil über dessen gesamte Innengewindelänge oder Innengewindetiefe erstreckt.

Die derart ausgebildeten ersten und zweiten Verbindungsteile können in einer Position, wo sich die ausgeräumten Längsseiten quasi gegenüberliegen, zueinander axial verschoben und in eine solche Position verbracht werden, bei der eine Anlage zu den verbindenden Teilen erreicht wird. Wenn diese Position gegeben ist, wird durch eine Rotationsverdrehbewegung zwischen erstem und zweitem Verbindungsteil eine Lageverschiebung der Teile zueinander bewirkt, die dazu führt, dass die entsprechenden Abschnitte des Innen- und Außengewindes ineinander greifen, mit der Folge der Ausbildung einer klassischen kraftschlüssigen Gewindeverbindung.

Bei einer ersten Ausführungsform wird von Schrauben, Bolzen oder Gewindestangen mit ursprünglich kreisförmigem Querschnitt ausgegangen, wobei das entsprechende Außengewinde eingerollt oder geschnitten wird. Im Anschluss erfolgt ein Ausräumen des Gewindes, zum Beispiel durch Schleifen oder Fräsen. Denkbar ist jedoch auch als Gewindestange oder Bolzen von einem Vierkantstab auszugehen und diese nur an den Flanken mit einem Gewinde zu versehen, wobei dann entsprechend die Mutter oder das Gegenstück einen analogen Vierkantquerschnitt mit Flanken-Gewindesegmenten aufzuweisen hat.

In einer Weiterbildung der Erfindung besteht das erste Verbindungsteil aus mehreren, in Querrichtung geteilten Gewindesegmenten, welche jeweils eine Ausräumung aufweisen.

Die einzelnen Gewindesegmente sind untereinander lösbar kraft- und/oder formschlüssig verbunden, und derart zueinander durch Drehung positionierbar, dass wahlweise alle Gewindesegmente eine in einer Ebene liegende, fluchtende Ausräumungsfläche bilden oder einzelne Gewindesegmente durch Drehung in eine Lage überführbar sind, bei der die jeweiligen Gewindesegment-Ausräumungsflächen unter einem Winkel zueinander liegen.

Die einzelnen Gewindesegmente können über einen jeweiligen axialen Fortsatz und Rücksprung verfügen, wobei zwischen Fortsatz und Rücksprung eine Gewindeverbindung vorgesehen ist.

Nachdem beispielsweise eine derartig ausgebildete Schraube oder ein derartig mit Gewindesegmenten versehener Bolzen in ein erfindungsgemäß ausgestaltetes Gegenstück, zum Beispiel ausgebildet als Mutter eingeführt ist, wird bei einer Ausführung einer Schraubbewegung im ersten Schritt ein Verdrehen der Gewindesegmente zueinander erfolgen, so dass bei fortgesetzter Schraubbewegung sich der notwendige Kraftschluss zum Herstellen der Verbindung ergibt.

Der Vorteil einer derartigen Lösung besteht darin, dass bei einer entsprechend segmentierten Schraube und einer Schraube großer Länge, angepasst an die zu verbindenden Bauteile nicht umständlich ein langes Hineinschrauben notwendig wird, sondern die mit Gewindesegmenten versehene Schraube durch das erfindungsgemäße zweite Verbindungsteil, ausgebildet als Gegenstück oder Mutter zügig eingeführt und durch die Drehung dann der eigentliche Schraub- und Kraftschlussprozess realisierbar ist.

In einer Ausgestaltung der Erfindung kann im Bereich der Ausräumung nach erfolgter kraftschlüssiger Verbindung ein Arretierkeil eingesetzt oder eingetrieben werden, der als Sicherung der Kraftschlussverbindung dient.

Es liegt im Sinne der Erfindung, dass sowohl das erste Verbindungsteil als auch das zweite Verbindungsteil jeweils mit einer üblichen Vollgewindeschraube oder Vollgewindemutter kombiniert einsetzbar ist.

Bei Notwendigkeit kann eine kraftschlüssige Schraubverbindung unter Nutzung der erfindungsgemäßen ersten und zweiten Verbindungsteile dadurch gesichert werden, dass auf ein freies Ende eines Bolzens oder einer Schraube mit Ausräumungsflächen dann eine klassische selbstsichernde Mutter aufgeschraubt wird.

In erfindungsgemäßer Weiterbildung weist das erste Verbindungsteil am oder im Schraubenkopf oder an dem in das zweite Verbindungsteil eintauchenden, gegenüberliegenden Ende der Gewindestange Mittel zum Schnellspannen in Form eines arretierbaren Hebels, insbesondere eines Kniehebels auf.

Diese Weiterbildung der Erfindung vervollkommnet die gewünschte werkzeuglose Handhabung beim Ausführen der Schnellverschraubung.

In einer diesbezüglichen Ausgestaltung weist der Schraubenkopf oder das Ende der Gewindestange mindestens eine Querbohrung auf, wobei in die Bohrung eine, mit dem vorerwähnten Hebel verbundene oder verbindbare Achse einsetzbar ist, welche eine Querschnittsfläche aufweist, die von der Querschnittsfläche der Bohrung abweicht.

Wenn beispielsweise der Bohrungsquerschnitt kreisförmig ist und der Querschnitt der Achse einem Halbkreis entspricht, kann durch eine Verschwenkbewegung des Hebels bzw. der Achse eine Klemmkraft zwischen den zu verbindenden Bauteilen, respektive der Schraubverbindung aufgebracht werden, so dass der gewünschte Kraftschluss entsteht.

Die Achse kann mindestens eine Ausnehmung oder eine Nase zum Fixieren des Hebels aufweisen. Der Hebel kann hierbei beispielsweise als U-förmiger Bügel oder aber auch als Hebel mit Abwinkelung ausgeführt werden.

Denkbar ist darüber hinaus, am Hebel oder an einem oder beiden Achsenenden eine Sollbruchstelle vorzusehen, derart, dass nach Ausführung der Schnellverschraubung und zusätzlicher Verspannung mittels des Hebels der Hebel oder außerhalb der Bohrung befindliche Achsenabschnitte entfernbar sind. Hierdurch kann in leichter Form eine Diebstahlsicherung geschaffen werden.

Bei einer weiteren Ausführungsform der Erfindung besteht die Möglichkeit, mindestens ein Ende der Achse mit einer konisch zulaufenden Spitze zu versehen oder keilförmig auszugestalten, um bereits beim Eintreiben oder Einsetzen der Achse eine weitere Kraftausübung auf die Schnellspannverbindung auszuüben.

Der Hebel oder die Achse können nach erfolgtem Schnellspannen in der erreichten Endlage fixiert werden. Hierfür kann zum Beispiel am verbindenden Bauteil eine Klaue oder ein Rasthaken ausgebildet werden, welcher ein entsprechendes Ende des Hebels umgreift, so dass auch bei dynamischen Belastungen ein ungewolltes Lösen der Schnellverschraubung wirksam verhinderbar ist.

Erfindungsgemäß ist insbesondere die Nutzung der vorgestellten Schnellverschraubung als Verbindungsmittel für eine Blitzschutz-, Erdungs- oder Potentialausgleichsklemme, wobei die entsprechende Klemme einen Überleger und eine Kontaktplatte besitzt und zwischen Überleger und Kontaktplatte Abschnitte elektrischer Leiter anordenbar sind und hierbei elektrische Leiter zur Anwendung und zum Einsatz kommen können, die einen völlig unterschiedlichen Querschnitt bzw. unterschiedliche Abmessungen in Querschnittsrichtung aufweisen. Unabhängig vom jeweiligen Leiter wird ein langwieriges und aufwändiges Hineindrehen einer Schraube oder Aufdrehen einer Mutter auf einen Gewindebolzen vermieden. Vielmehr kann in Verbindungsrichtung eine Steckbewegung mit anschließendem Verdrehen vorgenommen werden, wobei der endgültige Kraftschluss durch Nutzung des Kniehebelprinzips wie vorstehend erläutert erreicht wird.

Die Erfindung soll nachstehend anhand von Ausführungsbeispielen sowie unter Zuhilfenahme von Figuren näher erläutert werden.

Hierbei zeigen:
- Fig. 1A-C: eine Explosivdarstellung sowie Darstellungen einer Schnellverschraubung als Verbindungsmittel für eine Blitzschutz- oder Potentialausgleichsklemme, diese umfassend eine Kontaktplatte und einen Überleger;
- Fig. 2A-C: eine Explosivdarstellung sowie weitere Darstellungen einer Klemme für elektrotechnische Anwendungen mit einer Schnellverschraubung, ausgehend von einem ersten Verbindungsteil, ausgebildet als Schraube mit ausgeräumten Außengewinde sowie einem zweiten Verbindungsteil, ausgebildet als Gegenstück mit ausgeräumten Innengewinde, wobei die Fig. 2B eine Grundposition nach Einstecken der Schrauben und Fig. 2C eine Position und Lage der Schrauben im verspannten Zustand darstellt;
- Fig. 3A und 3B: verschiedene perspektivische Darstellungen einer Schnellverschraubung, ausgebildet als Potentialausgleichsklemme mit Hebel und Achse (Fig. 3A) sowie abgenommenen Hebel nach Ausführung des Schnellspannens mit entferntem Hebel, wobei gemäß Fig. 3A und 3B am Hebel eine Ausnehmung vorgesehen ist, in welche ein an die Ausnehmung geometrisch angepasstes Ende der Achse eingreift;
- Fig. 4A und 4B: eine Darstellung ähnlich derjenigen nach Fig. 3A und 3B, wobei jedoch gemäß Fig. 4A und Fig. 4B ein Ende der Achse eine Ausnehmung besitzt, in die ein entsprechend komplementäres Ende des Hebels lösbar eingreift;
- Fig. 5A-C: perspektivische Darstellungen einer weiteren Ausführungsform der Schnellverschraubung für eine Potentialausgleichsklemme mit einem U-förmigen oder bügelförmigen Hebel, der entweder biegeelastische Eigenschaften aufweist oder einen Schwächungsabschnitt besitzt, um nach Ausführen des Schnellspannvorganges durch Bewegung des Hebels unter Mitnahme der Achse dem U-förmigen Hebel oder Bügel aufspreizen zu können, so dass wie in den Fig. 5B und 5C ersichtlich, der Hebel oder Bügel als Sicherung gegen unbefugtes Lösen der Klemme entfernbar ist;
- Fig. 6A-C: perspektivische Darstellungen einer Schnellverschraubung für eine Potentialausgleichs- oder Blitzschutzklemme ähnlich den Darstellungen in den Fig. 1A-C, jedoch hier mit zwischen den Bauteilen, Kontaktplatte und Überleger aufgenommenen elektrischen Leitern;
- Fig. 7A-C: eine Weiterbildung des Hebels oder Bügels, wobei ein Ende des Hebels als konischer oder spitzer Fortsatz ausgebildet wird und dieses Hebelende als Achse dient;
- Fig. 8A und 8B: eine perspektivische Darstellung sowie eine Seitenansicht auf eine Blitzschutz- oder Potentialausgleichsklemme mit erfindungsgemäßer Schnellverschraubung in einer Ausführungsform, bei der Achse und Hebel einteilig realisiert wurden und über einen Rasthaken der Hebel klemmend fixierbar ist, wobei der Rasthaken als Fortsatz des Überlegers ausführbar ist;
- Fig. 9: verschiedene Darstellungen der Schnellverschraubung in einer Ausführungsform bei der ein Arretierkeil in die Ausräumung einsetz- oder eintreibbar ist;
- Fig. 10A-C: eine Ausführungsform einer Schnellverschraubung, wobei das als Mutter ausgebildete Gegenstück Aussparungen zur Aufnahme von ein oder zwei Achsen mit angeformten Betätigungshebeln besitzt mit der Möglichkeit des Schnellspannens unter Nutzung hier dargestellter Unterlegscheiben, wobei Fig. 10B den ungespannten und Fig. 10C den gespannten Zustand zeigt;
- Fig. 11A und 11B: die Darstellung einer Kombination der Nutzung einer Schraube mit Ausräumungsflächen in Verbindung mit einer klassischen Mutter mit Voll-Innengewinde;
- Fig. 12A und 12B: eine Darstellung der Kombinationsmöglichkeit einer Standardschraube mit Vollgewinde in Verbindung mit einer erfindungsgemäß ausgebildeten Mutter, welche gegenüberliegende Ausräumungsflächen aufweist;
- Fig. 13A-F: eine Explosivdarstellung (Fig. 13A) sowie mehrere perspektivische Darstellungen einschließlich Schnittansicht einer Schraube für eine erfindungsgemäße Schnellverschraubung mit ausgeräumten Gewinde, wobei die Schraube aus mehreren, in Querrichtung geteilten Gewindesegmenten besteht, welche jeweils eine Ausräumung aufweisen, wobei die Gewindesegmente untereinander lösbar kraft- und/oder formschlüssig (siehe Fig. 13A) verbunden sind;
- Fig. 14A-D: ein erstes Ausführungsbeispiel eines möglichen Einsatzes der Gewindesegment-Schraube zur Verbindung von zwei Werkstücken erster unterschiedlicher Dicke; und

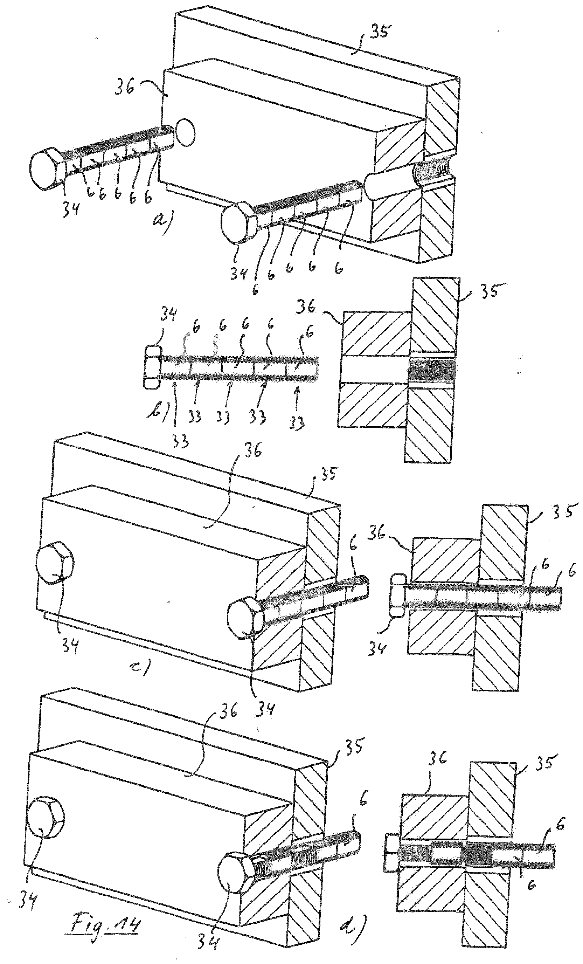

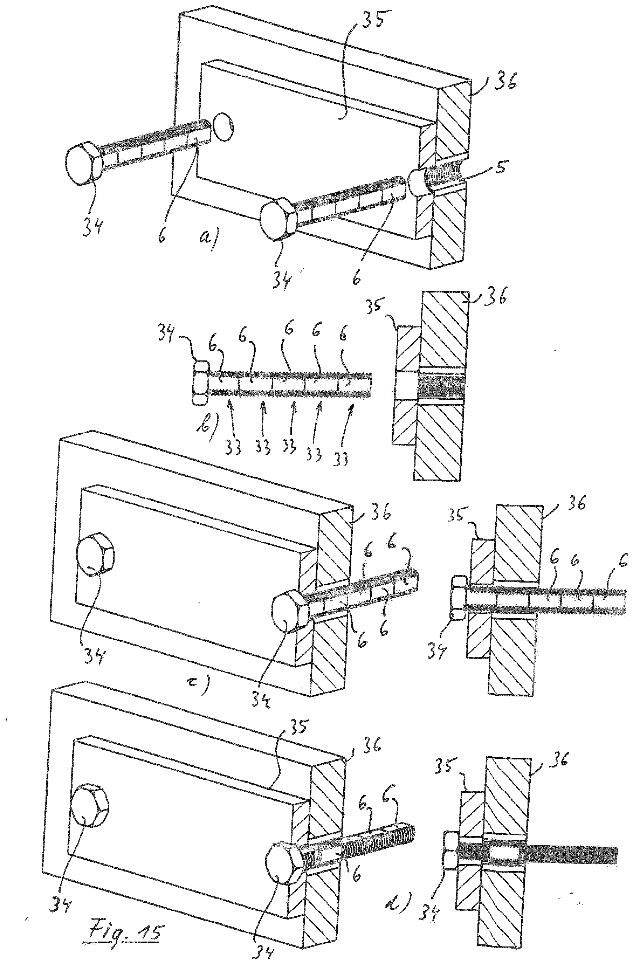

- Fig. 15A-D: ein zweites Beispiel des Einsatzes der Gewindesegment-Schraube zur Verbindung von Werkstücken unterschiedlicher Dicke, wobei jeweils die Figuren 14D als perspektivische Darstellung und Schnittansicht und 15D als perspektivische Darstellung und Schnittansicht erkennen lassen, wie sich beim Ausführen der Drehbewegung die betreffenden Gewindesegmente gegeneinander verschieben und eine geänderte Rotationslage zueinander einnehmen, so dass nach dem leichten und schnellen Einstecken der Langschraube durch fortgesetzte Schraubbewegung der Kraftschluss zwischen den gezeigten Bauteilen herstellbar ist.

Für gleiche oder gleichwirkende Bauteile oder Baugruppen werden in der nachfolgenden Beschreibung der Ausführungsbeispiele identische Bezugszeichen verwendet, auch wenn dies in der jeweiligen Figurenbeschreibung nicht nochmals erläutert wird.

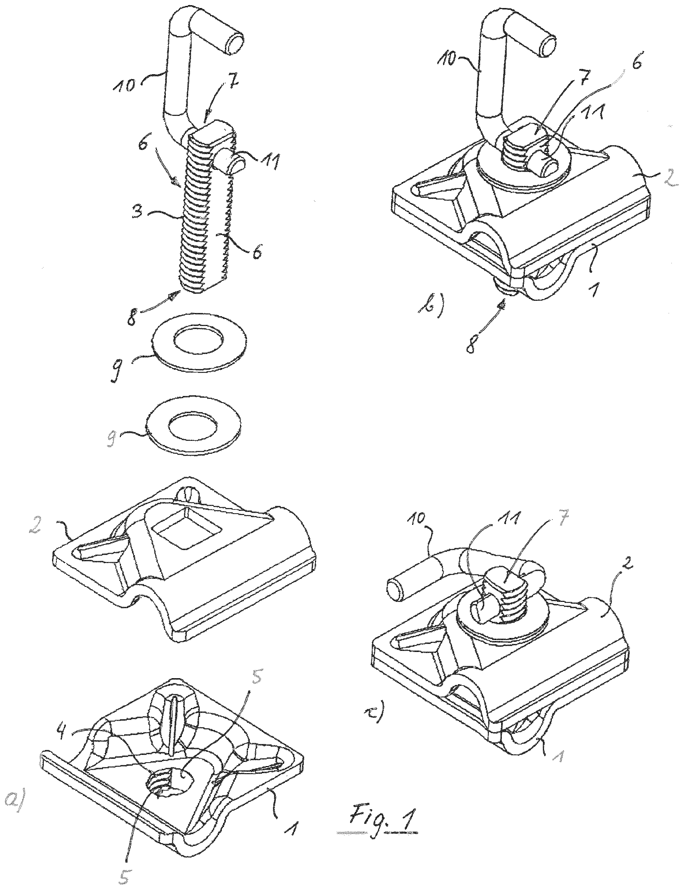

Bei dem Ausführungsbeispiel gemäß den Darstellungen nach Fig. 1A-C wird von einer Blitzschutz- oder Potentialausgleichsklemme ausgegangen, welche eine Kontaktplatte 1 besitzt, die mit einem Überleger 2 zusammenwirkt.

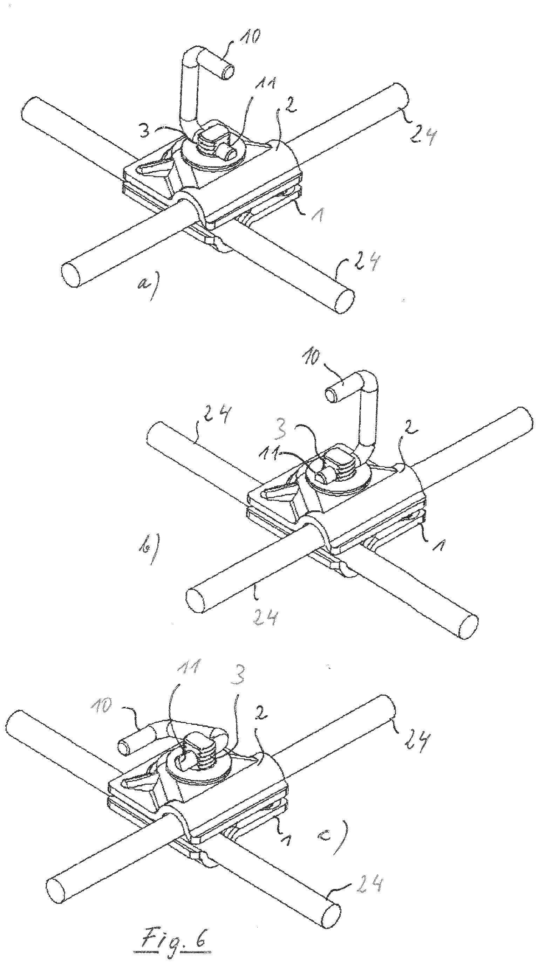

Die Kontaktplatte 1 und der Überleger 2 werden durch eine Schraubverbindung aneinander fixiert, wobei die Ausformungen in der Kontaktplatte 1 bzw. des Überlegers 2 der Aufnahme von Abschnitten elektrischer Leiter dienen, wie dies die Fig. 6A-C beispielhaft zeigen.

Die Schnellverschraubung gemäß Ausführungsbeispiel geht von einem ersten Verbindungsteil aus, welches als Gewindestange 3 realisiert ist.

Ein zweites Verbindungsteil ist im gezeigten Beispiel die Kontaktplatte 1, welche eine Durchgangsbohrung besitzt.

Diese Durchgangsbohrung weist ein ausgeräumtes Innengewinde 4 auf. Die entsprechenden Ausräumungsflächen 5 liegen sich ebenso gegenüber wie die Ausräumungsflächen 6 der Gewindestange 3.

Die Ausräumung an der Gewindestange 3 erstreckt sich über der gesamten Länge, was jedoch nicht zwingend ist. Beispielsweise kann im Kopfbereich 7 der Gewindestange 3 auch ein durchgängiges Gewinde ohne Ausräumungsfläche vorhanden sein oder es sich im Kopfbereich 7 um einen vollkommen gewindefreien Abschnitt oder die Ausbildung eines Schraubenkopfes handeln.

Auf jeden Fall erstreckt sich jedoch die jeweilige Ausräumungsfläche 6 von der Gewindespitze 8 in Eindrehrichtung der Gewindestange 3 auf den Längsseiten.

Die Gewindestange 3 nimmt noch Unterlegscheiben 9 auf, wie dies in den Darstellungen der Fig. 1B und 1C ersichtlich ist.

Ausgehend von der Position der Einzelteile gemäß der Fig. 1A wird nun die Gewindestange durch die Kontaktplatte unter Nutzung der dortigen Ausnehmung geschoben, wobei sich dann die Lage gemäß Fig. 1B ergibt. Durch eine Drehung der Gewindestange 3 um 90° ergibt sich die gewünschte Schnellverschraubung. Diese Position ist in der Fig. 1C erkennbar.

Der endgültige Kraftschluss wird unter Nutzung des Hebels 10 bewirkt.

Diesbezüglich weist ein Ende der Gewindestange 3 eine kreisförmige Bohrung auf.

In diese kreisförmige Bohrung wird ein achsenförmiges Ende 11 des Hebels 10 eingeschoben (siehe Fig. 1A und 1B). Dabei besitzt das achsförmige Ende 11 eine vom Querschnitt der Bohrung in der Gewindestange 3 abweichende Querschnittsfläche. Insbesondere weist das achsförmige Ende 11 einen halbkreisförmigen Querschnitt auf. Wird dann der Hebel 10 ausgehend von der Position nach Fig. 1B in eine Position gemäß Fig. 1C verschwenkt, verändert sich die Lage des achsförmigen Endes 11, wobei infolgedessen eine Kniehebelkraft auf die Unterlegscheibe 9 zur Einwirkung kommt und der entsprechende Kraftschluss der zu verbindenden Teile, nämlich der Kontaktplatte 1 und dem Überleger 2 hergestellt ist.

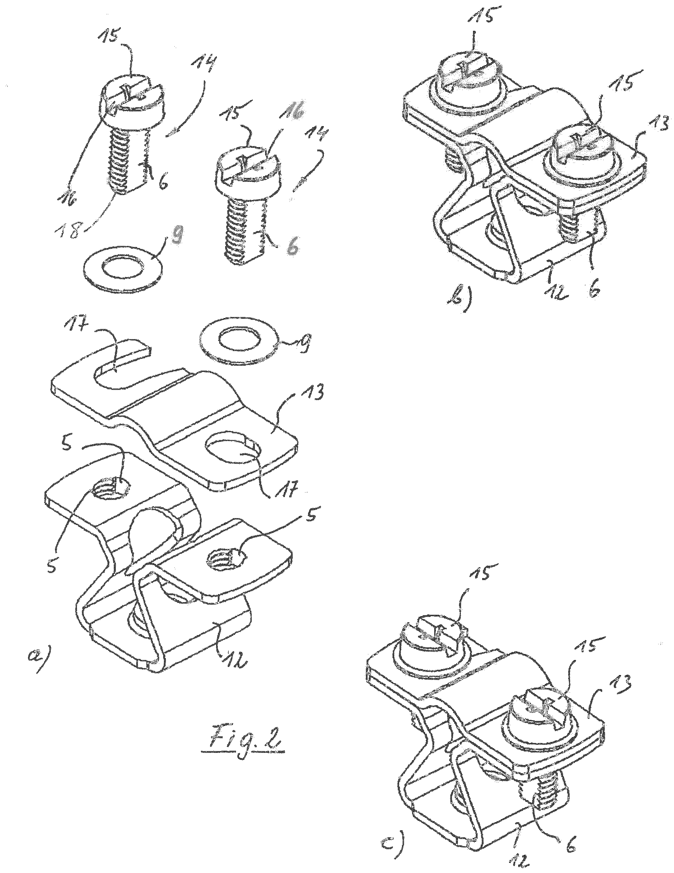

Bei dem Ausführungsbeispiel nach den Fig. 2A-C wird von einer zweiteiligen Klemme, umfassend ein Klemmunterteil 12 und ein Klemmoberteil 13 ausgegangen.

Zwei gegenüberliegende Schenkel des Klemmenunterteiles 12 besitzen eine Bohrung mit ausgeräumten Innengewinde analog demjenigen ausgebildet in der Kontaktplatte 1 nach den Fig. 1A-C.

Klemmenunterteil 12 und Klemmenoberteil 13 werden unter Zuhilfenahme der erfindungsgemäß ausgebildeten Schrauben 14 verbunden.

Die Schrauben 14 weisen einen Schraubenkopf 15 mit Einfachschlitz oder Kreuzschlitz auf.

Das jeweilige Gewinde der Schrauben 14 ist an zwei gegenüberliegenden, in Schraubrichtung verlaufenden Längsseiten ausgeräumt, weist also Ausräumungsflächen 6 auf.

Die Schrauben 14 werden in einem ersten Schritt unter Nutzung der Ausnehmungen 17 im Klemmenoberteil 13 eingesetzt und hindurchgesteckt, wobei die Gewindeflächen 18 der Schrauben beim Durchstecken jeweils der entsprechenden Ausräumungsfläche 5 dem Klemmenunterteil 12 gegenüberliegen. Durch anschließendes 90°-Drehen der jeweiligen Schraube 14 mit Schraubenkopf 15 ergibt sich ein Ineinandergreifen der Gewindeabschnitte von Klemmenunterteil 12 mit der jeweiligen Schraube 14 mit dem gewünschten Kraftschluss.

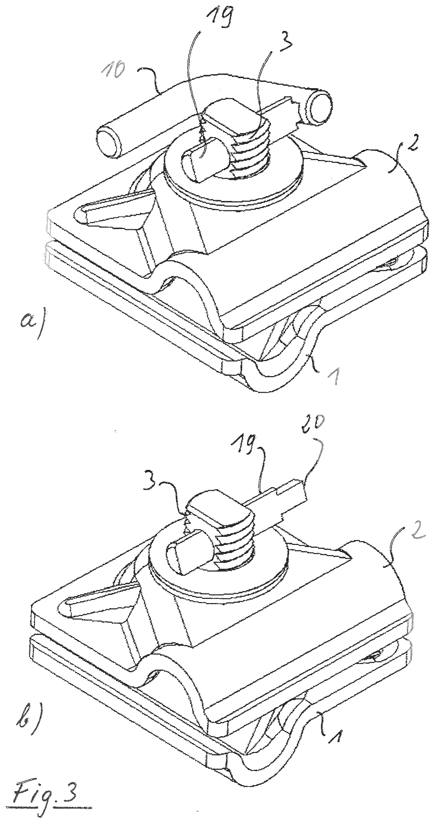

Die Fig. 3A und 3B zeigen eine Ausbildung einer Potentialausgleichsklemme, wiederum bestehend aus Kontaktplatte 1 und Überleger 2 mit erfindungsgemäßer Schnellverschraubung wie anhand der Fig. 1A-C erläutert.

Im Unterschied zu der Darstellung und dem Ausführungsbeispiel nach den Fig. 1A-C wird gemäß Fig. 3A und 3B von einer Lösung ausgegangen, bei welcher der Hebel 10 von einer Achse 19 trennbar ist.

Gemäß der Darstellung nach Fig. 3A und 3B weist die Achse 19 einen nasenartigen Fortsatz 20 auf, der eine Querschnittsfläche besitzt, die einer Ausnehmung im entsprechenden Ende des Hebels 10 komplementär ist. Nach Ausführung der Schnellspannung kann der Hebel 10 vom entsprechenden Ende der Achse 19 abgezogen werden, so dass eine Diebstahlsicherung gewährleistet ist.

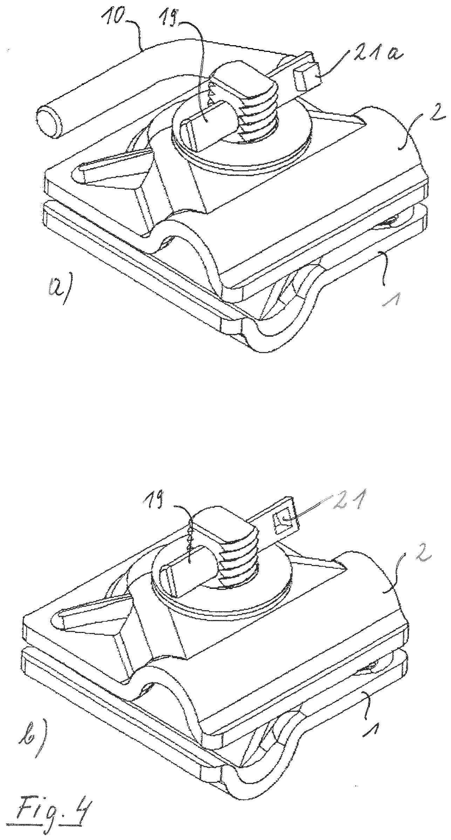

Die Fig. 4A und 4B zeigen eine Weiterbildung der Variante zwischen Trennung von Achse und Hebel, wobei jedoch bei der Fig. 4A und 4B ein Ende der Achse 19 eine Ausnehmung 21 aufweist, in welche ein nasenartiger Fortsatz 21 des Hebels 10 eingreift.

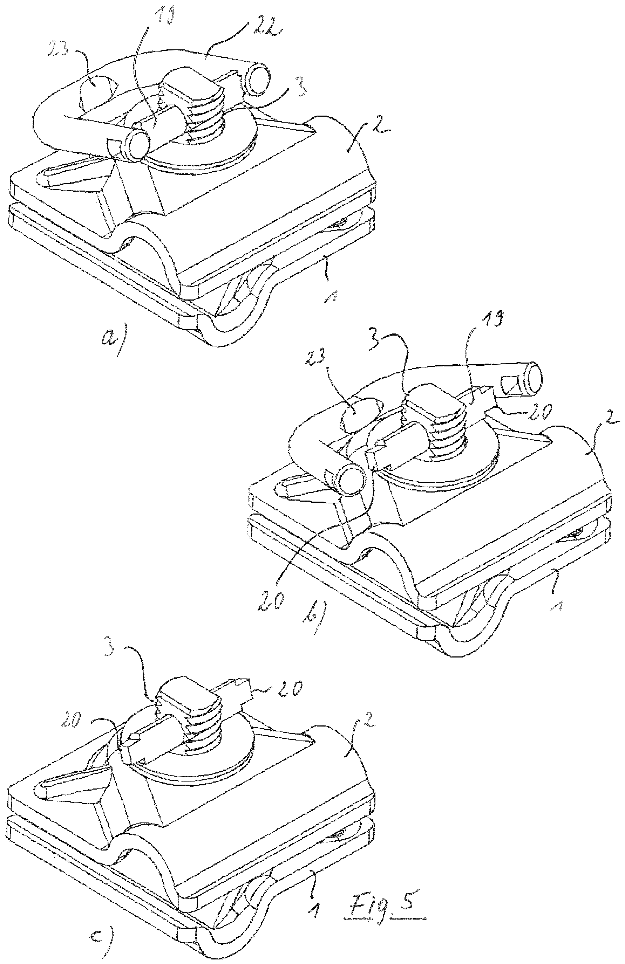

Bei dem Ausführungsbeispiel unter Rückgriff auf die Fig. 5A-C erfolgt eine Weiterbildung des Hebels 10 derart, dass dieser U-förmig oder bügelartig ausgeführt ist.

Der bügelartige Hebel 22 weist einen Schwächungsabschnitt 23 auf, um nach ausgeführtem Schnellspannvorgang den bügelartigen Hebel 22 aufspreizen zu können, wie dies in der Fig. 5B dargestellt ist mit der Folge, dass der Bügel 22 entfernt werden kann und auf diese Weise ebenso eine Sicherung gegen unbefugtes Betätigen realisiert werden kann, wie dies die Fig. 5C präsentiert.

Die Fig. 6A-C zeigen nun eine Variante der erfindungsgemäßen Schnellverschraubung für eine Blitzschutz- oder Potentialausgleichsklemme mit jeweils aufgenommenen elektrischen Leitern 24.

Fig. 6A zeigt die noch lose, kraftfreie Verbindung zwischen Kontaktplatte und Überleger 1; 2 nebst aufgenommenen elektrischen Leitern 24.

Fig. 6B den Zustand nach Ausführung einer 90°-Rotationsbewegung bezogen auf die Gewindestange unter Nutzung des Hebels 10 und die Fig. 6C den Abschluss des Schnellspannvorganges durch Verschwenken des Hebels 10 ausgehend von einer quasi senkrechten Position in eine nahezu waagerechte oder ebene Lage mit entsprechendem Kraftschluss.

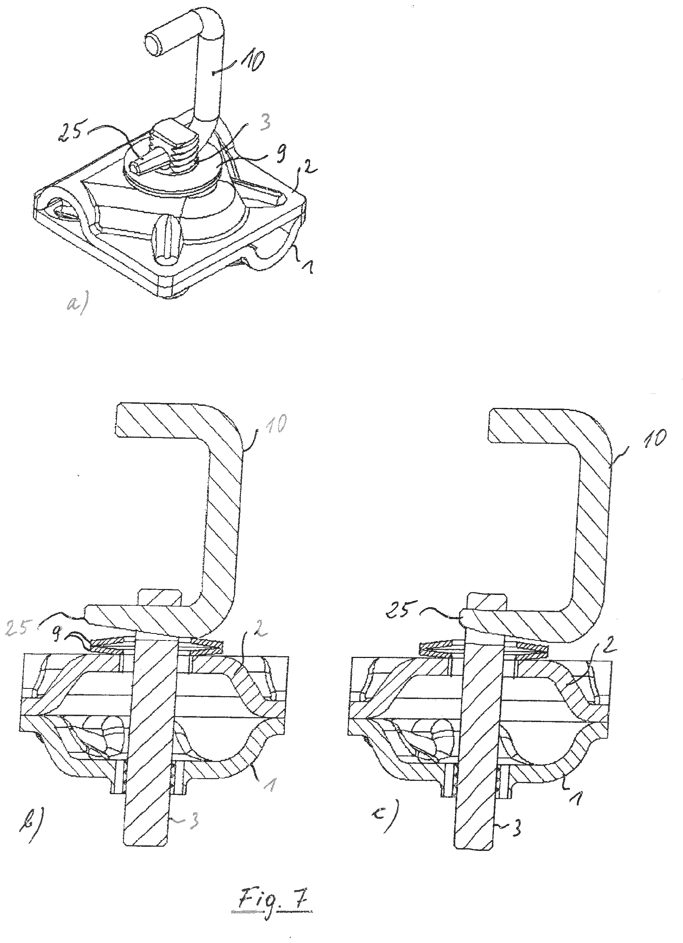

Bei dem Beispiel nach den Fig. 7A-C wird wiederum von einem einteiligen Hebel 10 ausgegangen, der einen achsförmigen Fortsatz, ausgebildet als Konus 25 besitzt. Diesbezüglich kann zunächst ein keilförmiges Eintreiben des entsprechenden konischen Endes 25 erfolgen, wie dies die Schnittdarstellungen nach den Fig. 7B und 7C zeigen. Ist dann die Endlage gemäß Fig. 7A erreicht, wird die Kippbewegung des Hebels 10 wie in der Fig. 6C dargestellt, ausgeführt.

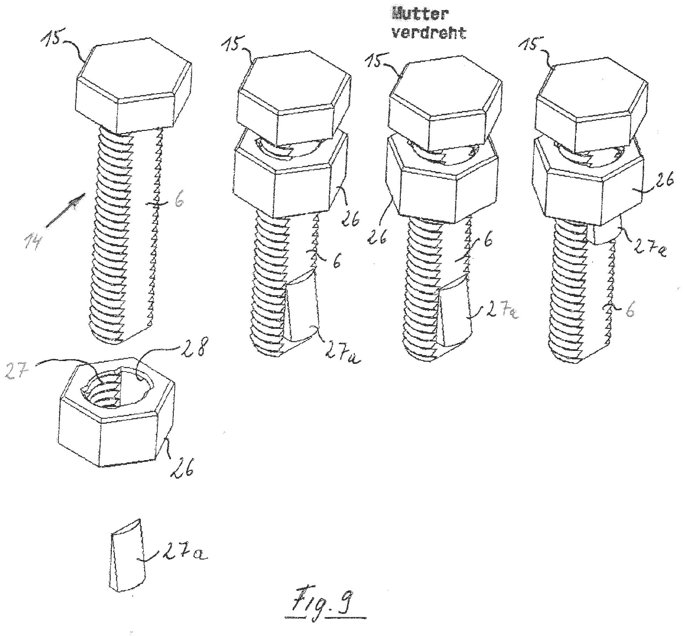

Mit Hilfe der Fig. 9 sei illustriert, wie eine zusätzliche Sicherung der Schnellverschraubung erfolgen kann.

Diesbezüglich wird von der Schraube 14 mit Schraubenkopf 15 ausgegangen, wobei die Schraube 14 gegenüberliegende Ausräumungsflächen 6 besitzt. Ebenso weist eine Mutter 26 ein Teilgewinde 27 und gegenüberliegende Ausräumungsflächen 28 auf. Nach Erreichen der gewünschten Position zwischen Schraube 14 und Mutter 26 kann der Arretierkeil 27a in die Freifläche zwischen Ausnehmung 6 der Schraube 14 und der entsprechenden Innenfläche der Mutter 26 eingetrieben werden, wie dies aus der Abfolge der Darstellung nach Fig. 9 für den Fachmann nachvollziehbar ist.

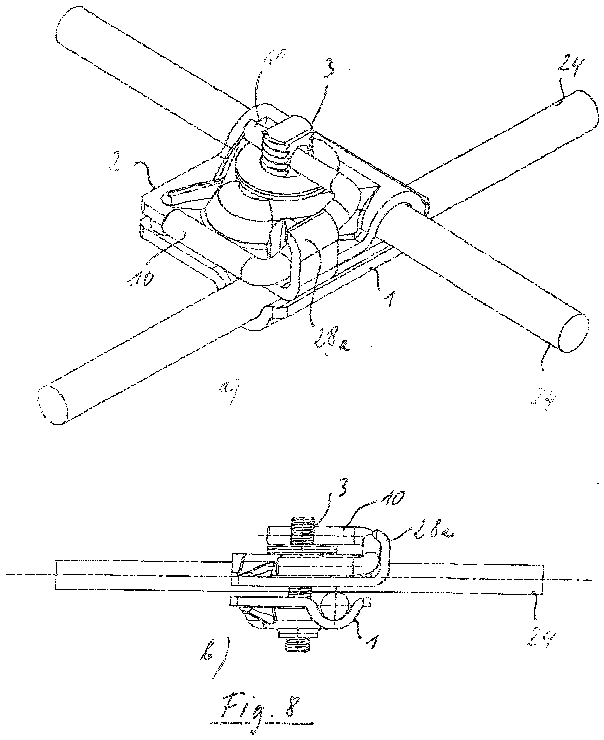

Der Hebel 10 mit seinem achsförmigen Ende 11 kann wie in den Fig. 8A und 8B dargestellt von einer hakenförmigen Nase 28a in seiner Endposition klemmend gehalten werden.

Diese hakenförmige Nase 28a kann am Überleger 2 angeformt oder ein Bestandteil desselben sein.

Bei den bisherigen Ausführungsbeispielen wurde davon ausgegangen, dass die Gewindestange 3 oder die Schraube 14 eine entsprechende Ausnehmung zur Aufnahme des achsförmigen Endes 11 bzw. der Achse 19 besitzt.

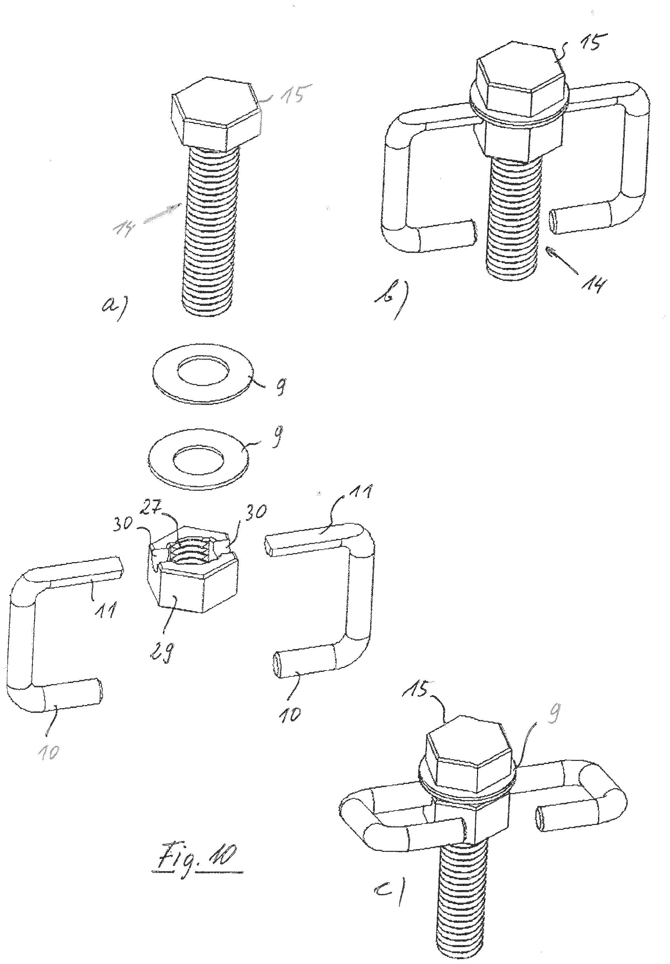

In quasi Umkehr des erfindungsgemäßen Prinzips ist es aber auch ebenso möglich, eine Mutter 29 mit gegenüberliegenden Ausformungen 30 zu versehen, in die jeweils ein achsförmiges Ende 11 eines entsprechenden Teilhebels 10 eingreift. Die Fig. 10B und 10C machen deutlich, wie durch Verschwenken der beiden Hebel 10 mit ihren jeweiligen achsförmigen Enden 11 eine Schnellklemmung bewerkstelligt werden kann.

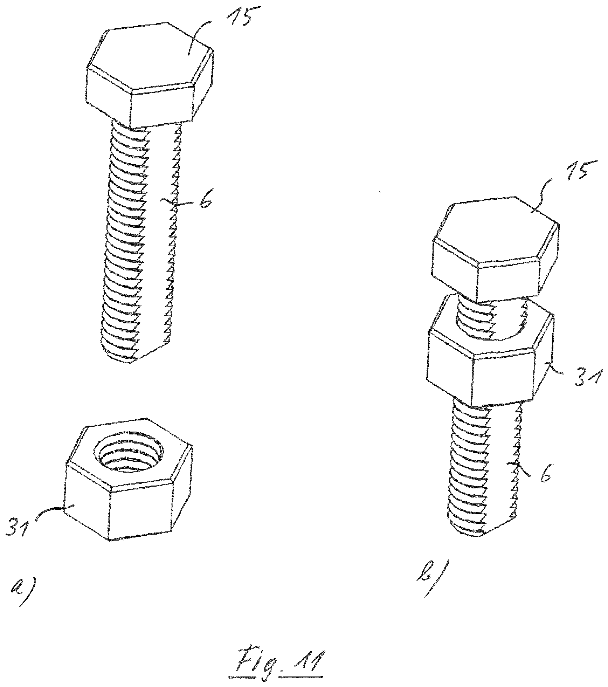

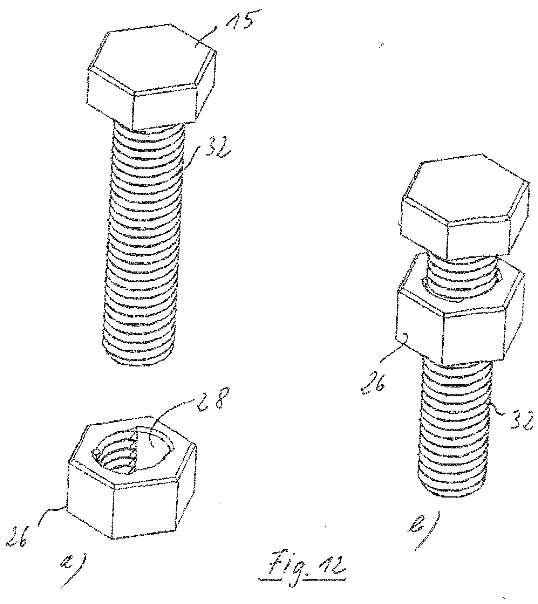

Die selbsterklärenden Fig. 11A und 11B und 12A und 12B zeigen die prinzipielle Möglichkeit auf, eine erfindungsgemäße Schraube 14 mit einer üblichen Vollgewindemutter 31 zu verbinden (Fig. 11A und 11B) oder aber, wie in den Fig. 12A und 12B dargestellt ist, eine erfindungsgemäße Mutter 26 mit Ausräumungsflächen 28 mit einer Standard-Vollgewindeschraube 32 zu kombinieren.

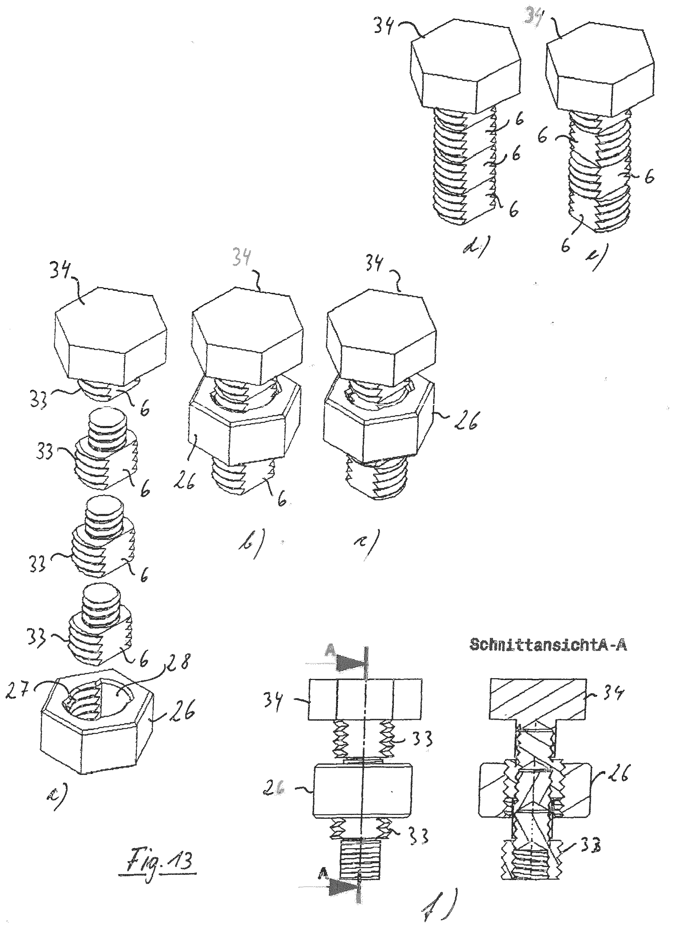

Eine Weiterbildung der Ausführungsbeispiele zeigt die Schnellverschraubung nebst Anwendungsmöglichkeiten gemäß den Fig. 13-15.

Dabei ist das erste erfindungsgemäße Verbindungsteil, zum Beispiel ausgebildet als Schraube so realisiert, dass die entsprechende Schraube aus mehreren in Querrichtung geteilten Gewindesegmenten 33 besteht.

Die in der Fig. 13A in Explosivdarstellung gezeigte Gewindesegment-Schraube entsteht durch Schraubverbinden der einzelnen Segmente 33, wobei ein oberes der Gewindesegmente 33 in den Schraubenkopf 34 übergeht.

Gemäß den Darstellungen nach den Fig. 13B und Fig. 13D sind in einer ersten Position alle Ausräumungsflächen 6 der Gewindesegmente 33 fluchtend.

In diesem Zustand kann die Gewindesegment-Schraube in einem Zug durch die Mutter 29 mit den entsprechenden Ausräumungsflächen eingeschoben werden. Erfolgt dann eine Drehbewegung wie in der Fig. 13C gezeigt, verschieben sich die Gewindesegmente zueinander, wie dies prinzipiell in der Fig. 13E sowie Fig. 13F nachvollziehbar ist. Hierdurch kommt es zu einer quasi echten Verschraubung mit üblichen Kraftschlusseffekten, auch ohne zusätzliche Hebelwirkung oder zusätzliche Verspannung.

Beispiele von Anwendungen von Schrauben mit Gewindesegmenten 33 zeigen die Darstellungen gemäß den Fig. 14A-D und Fig. 15A-D. Dabei werden Bauteile jeweils unterschiedlicher Dicke miteinander kraftschlüssig verbunden.

Es ist nachvollziehbar, dass je nach der sich ergebenden Gesamtdicke der Bauteile 35 und 36 die Anzahl der gewünschten Segmente 33 der entsprechenden Schraube im Vorfeld festgelegt werden kann. Sind vor Ort Bauteile anderer Abmessungen vorhanden, kann ein entsprechendes Gewindesegment entfernt aber auch ein weiteres Gewindesegment hinzugefügt werden.

Grundsätzlich besteht die Möglichkeit, den in den Figuren dargestellten Hebel 10 oder 22 so auszugestalten, dass er im verspannten Zustand an einer abgeflachten Stelle anliegt und so in seiner Lage positionierbar ist. Auch anderweitige Fixierungen des Hebels als das gezeigte Beispiel mit hakenförmiger Nase 28a sind denkbar, ohne den Erfindungsgedanken zu verlassen.

Der bügelartige Hebel 22 muss auch nicht über einen Schwächungsabschnitt 23 verfügen, sondern kann federnde Eigenschaften besitzen, um diesen quasi durch Aufspreizen von der Achse bzw. den Achsenden zu entfernen und abnehmen zu können.

Die Druckkraft für die Hebel-Schnellverschraubung kann auch durch eine axiale Bohrung, die in Schraubenlängsrichtung verläuft, zwischen den zu verbindenden Bauteilen aufgebracht oder erzeugt werden.

Bei der Ausbildung eines kegeligen oder konusförmigen Achsendes bzw. Hebels besteht die Möglichkeit, durch Verschieben des Hebels in der Aufnahmebohrung auch bei Gewindetoleranzen immer eine gleichmäßige Ausgangsposition des Hebels zu erreichen, um dann beim Verschwenken des Hebels mit folgender Achsdrehung reproduzierbare Klemm- und Verspannkräfte zu erzeugen.

Bei der Gewindesegmentschraube sind die Längen der einzelnen Segmente so gewählt, dass nach dem Verdrehen der Segmente immer Gewindegänge der Schraube mit Gewindegängen des Gegengewindes der Mutter im Eingriff befindlich sind.

### Bezugszeichenliste

- 1: Kontaktplatte
- 2: Überleger
- 3: Gewindestange
- 4: Innengewinde
- 5; 6: Ausräumungsflächen
- 7: Kopfbereich
- 8: Gewindespitze
- 9: Unterlegscheibe
- 10: Hebel
- 11: achsförmiges Ende
- 12: Klemmenunterteil
- 13: Klemmenoberteil
- 14: Schraube
- 15: Schraubenkopf
- 16: Schlitz
- 17, 21: Ausnehmung
- 18: Gewindefläche
- 19: Achse, trennbar
- 20; 21: nasenartiger Fortsatz
- 22: bügelartiger Hebel
- 23: Schwächungsabschnitt
- 24: elektrischer Leiter
- 25: Konus
- 26: Mutter
- 27: Teilgewinde
- 27a: Arretierkeil
- 28: Ausräumungsfläche Mutter
- 28a: hakenförmige Nase
- 29: Mutter mit Ausformungen
- 30: Ausformungen
- 31: Vollgewindemutter
- 32: Standard-Vollgewindeschraube
- 33: Gewindesegment
- 34: Schraubenkopf
- 35; 36: Bauteil

## Patentansprüche

1. Schnellverschraubung, insbesondere zum Verbinden von mehrteiligen Baugruppen, welche in unterschiedlichen Positionen zueinander fixierbar sind, insbesondere Baugruppen für elektrotechnische Einrichtungen oder Anwendungen, bestehend aus einem ersten Verbindungsteil, ausgebildet als Gewindestange oder Schraube, jeweils mit Außengewinde, und einem zweiten Verbindungsteil, ausgebildet als Gegenstück oder Mutter, jeweils mit zum Außengewinde komplementären Innengewinde,
**dadurch gekennzeichnet, dass**
sowohl das Außengewinde als auch das Innengewinde an mindestens zwei gegenüberliegenden, in Schraubrichtung verlaufenden Längsseiten ausgeräumt oder abgeflacht ist, wobei sich die Ausräumung oder Abflachung beim ersten Verbindungsteil mindestens über einen Längsseitenabschnitt, beginnend von einer Gewindespitze und beim zweiten Verbindungsteil über dessen gesamte Innengewindelänge oder Innengewindetiefe erstreckt.

2. Schnellverschraubung nach Anspruch 1,
**dadurch gekennzeichnet, dass**
das erste Verbindungsteil aus mehreren, in Querrichtung geteilten Gewindesegmenten besteht, welche jeweils eine Ausräumung aufweisen, wobei die Gewindesegmente untereinander lösbar kraft- und/oder formschlüssig verbunden sind und derart zueinander durch Drehung positioniert werden können, dass wahlweise alle Gewindesegmente eine in einer Ebene liegende, fluchtende Ausräumungsfläche bilden oder einzelne Gewindesegmente durch Drehung in eine Lage überführbar sind, bei der die jeweiligen Gewindesegment-Ausräumungsflächen unter einem Winkel zueinander liegen.

3. Schnellverschraubung nach Anspruch 1 oder 2,
**dadurch gekennzeichnet, dass**
im Bereich der Ausräumung ein Arretierkeil einsetz- oder eintreibbar ist.

4. Schnellverschraubung nach einem der vorangegangenen Ansprüche,
**dadurch gekennzeichnet, dass**
sowohl das erste Verbindungsteil als auch das zweite Verbindungsteil jeweils mit einer üblichen Vollgewindeschraube oder Vollgewindemutter kombiniert einsetzbar ist.

5. Schnellverschraubung nach einem der vorangegangenen Ansprüche,
**dadurch gekennzeichnet, dass**
das erste Verbindungsteil am oder im Schraubenkopf oder an dem in das zweite Verbindungsteil eintauchenden, gegenüberliegenden Ende die Gewindestange Mittel zum Schnellspannen in Form eines arretierbaren Hebels, insbesondere eines Kniehebels aufweist.

6. Schnellverschraubung nach Anspruch 5,
**dadurch gekennzeichnet, dass**
der Schraubenkopf oder das Ende der Gewindestange mindestens eine Querbohrung aufweist, wobei in die Bohrung eine, mit dem Hebel verbundene oder verbindbare Achse einsetzbar ist, welche eine Querschnittsfläche besitzt, die von der Querschnittsfläche der Bohrung abweicht.

7. Schnellverschraubung nach Anspruch 6,
**dadurch gekennzeichnet, dass**
der Bohrungsquerschnitt kreisförmig und der Achsenquerschnitt halbkreisförmig ausgebildet ist.

8. Schnellverschraubung nach Anspruch 5, 6 oder 7,
**dadurch gekennzeichnet, dass**
die Achse mindestens eine Ausnehmung oder eine Nase zum Fixieren des Hebels aufweist.

9. Schnellverschraubung nach Anspruch 5, 6 oder 7,
**dadurch gekennzeichnet, dass**
die Achse und der Hebel einteilig ausgebildet sind, wobei am Hebel oder der Achse eine Sollbruchstelle zur Trennung nach erfolgtem Schnellspannen vorgesehen ist.

10. Schnellverschraubung nach einem der Ansprüche 5 bis 9,
**dadurch gekennzeichnet, dass**
mindestens ein Ende der Achse eine konisch zulaufende Spitze oder eine Keilform aufweist.

11. Schnellverschraubung nach einem der Ansprüche 5 bis 10,
**dadurch gekennzeichnet, dass**
der Hebel oder die Achse nach erfolgtem Schnellspannen in der erreichten Endlage fixierbar ist.

12. Schnellverschraubung nach einem der vorangegangenen Ansprüche,
**dadurch gekennzeichnet, dass**
diese als Verbindungsmittel für eine Blitzschutz-, Erdungs- oder Potentialausgleichsklemme ausgebildet ist, wobei die Klemme einen Überleger und eine Kontaktplatte besitzt und zwischen Überleger und Kontaktplatte Abschnitte elektrischer Leiter anordenbar sind.
